# EUROPÄISCHE PATENTSCHRIFT

(11) **EP 0 676 033 B1**
(45) Veröffentlichungstag und Bekanntmachung des Hinweises auf die Patenterteilung: **06.05.1998**
(21) Anmeldenummer: 94902617.3
(22) Anmeldetag: 22.12.1993
(51) Int. Cl.: G01B 7/34, G01B 21/30, G01B 11/30, G01R 31/308

(54) **VERFAHREN UND VORRICHTUNG ZUR MESSUNG VON GEOMETRIEN TECHNISCHER OBERFLÄCHEN**
PROCESS AND DEVICE FOR MEASURING GEOMETRIES OF TECHNICAL SURFACES
PROCEDE ET DISPOSITIF POUR LA MESURE DE LA GEOMETRIE DE SURFACES DE PRODUITS TECHNIQUES

(30) Priorität: 28.12.1992 DE 4244332
(43) Veröffentlichungstag der Anmeldung: 11.10.1995
(73) Patentinhaber: MICROSPACE MESS- UND SENSORTECHNIK GMBH, D-09221 Klaffenbach (DE)
(72) Erfinder: KLÖDEN, Rolf, D-09123 Chemnitz (DE)
(74) Vertreter: Findeisen, Andreas
(86) Internationale Anmeldenummer: DE9301233
(87) Internationale Veröffentlichungsnummer: WO9415172

(56) Entgegenhaltungen:
- WO-A-92/08947
- DE-C- 3 922 204
- US-A- 4 983 911
- US-A- 5 170 127
- OPTICAL ENGINEERING, Bd.30, Nr.10, Oktober 1991, BELLINGHAM US Seiten 1461 - 1467 E.MILANA ET AL 'bayesian classification of machined surface finishing by two-dimensional analysis of diffraction patterns'
- PATENT ABSTRACTS OF JAPAN vol. 5, no. 38 (P-052) 12. März 1981 & JP,A,55 163 463 (TAKAHASHI HIDEO) 19. Dezember 1980

## Beschreibung

### Technisches Gebiet

Die Erfindung betrifft ein Verfahren und eine vorrichtung zur Messung von Geometrien technischer Oberflächen.
Für Anwendungsgebiete, bei denen aus funktionellen und technologischen Gründen schnell und einfach Größen und/oder zwei- oder dreidimensionale grafische Darstellungen ermittelt bzw. erzeugt werden sollen, die aussagekräftig über die Gestalt der Oberfläche von Werkstücken sind, ist dieses Verfahren besonders geeignet. Dies betrifft vielfältige Bereiche des Maschinen-, Fahrzeug- und Gerätebaus sowie Gebiete anderer Industriezweige, bei denen Messungen von Oberflächengeometrien, insbesondere der Rauheit technischer Oberflächen, erforderlich sind, wie z.B. Elektro-, Elektronik- und Halbleiterindustrie, Kunststoff-, Gummi-, Papier- und Druckindustrie, Luft- und Raumfahrtindustrie, Entwicklungs- und Forschungsbereiche, medizintechnischer Bereich u.v.m..

### Stand der Technik

Bekannt ist in der Oberflächenmeßtechnik das Tastschnittverfahren. Wie aus dem Namen bereits hervorgeht, wird bei diesem Verfahren die dreidimensionale Oberfläche in einem zweidimensionalen Profilschnitt abgetastet. Zur Erfassung der Oberflächenmikrogestalt dient im allgemeinen eine feine Diamant-Tastspitze. Die Tastspitze ist in einem Tastsystem, nahezu reibungsfrei gelagert, eingebaut. Wird das Tastsystem mit Hilfe eines Vorschubgerätes über die Oberfläche geführt, werden die Oberflächenabweichungen von der Tastspitze erfaßt. Die durch die Profilzerklüftung der Oberfläche bedingten vertikalen Lageveränderungen der Tastspitze werden durch einen im Tastsystem befindlichen elektromechanischen Wandler in elektrische Signale umgewandelt und dem Meß- und Auswerterechner zugeleitet (Sander,M: Oberflächenmeßtechnik für den Praktiker, Feinprüf GmbH, Göttingen 1989). Bei dem Tastschnittverfahren ist zu beachten, daß die Ermittlung der Oberflächenkennwerte aus einem zweidimensionalen Profilschnitt erfolgt, obwohl die Oberfläche dreidimensional ist. Weiterhin ist die untere Grenze der noch erfaßbaren Abweichungen weitgehend durch die Geometrie der Tastspitze bestimmt. Aufgrund der Empfindlichkeit des Tastsystems und der Rüst- und Meßzeit von ca. 15 Sekunden, ist dieses Meßverfahren zur automatischen Prüfung an der Bearbeitungsmaschine oder im Prüfautomat nicht geeignet. Neben den dominierenden Tastschnittgeräten werden in speziellen Fällen auch optisch arbeitende Oberflächenmeßgeräte eingesetzt. Es handelt sich hierbei u.a. um das Lichtschnitt- und Interferenzmikroskop. Die Darstellung der Oberflächengestalt erfolgt bei diesen Verfahren in Form von Höhenschichtlinien. Der Einsatz dieser Geräte setzt eine möglichst ebene und gut reflektierende Oberfläche voraus. Die Berechnung der verschiedenen Oberflächenkennwerte oder eine Profilaufzeichnung ist nicht möglich. Neben den Lichtschnitt- und Interferenzverfahren haben in den letzten Jahren optoelektronische Oberflächen-Meßverfahren große Aufmerksamkeit und Eingang in die Praxis gefunden. Unterschieden werden hierbei das Streulichtverfahren und das Fokusdetektorverfahren. Bei dem Streulichtverfahren wird ein von einer Infrarot-Leuchtdiode abgesendetes Strahlenbündel durch ein optisches System auf die Oberfläche fokussiert. Der Lichtfleckdurchmesser beträgt ca. 2 mm. Je nach Rauheit und Struktur der Oberfläche wird das Licht mehr oder weniger gestreut. Diese Streuverteilung gelangt auf eine CCD-Zeile, in der die unterschiedlichen Streuwinkel in elektrische Signale umgewandelt werden. Eine mikroprozessorgesteuerte Auswerteeinheit errechnet aus diesen Signalen einen optischen Streuwert s_{N} (Standardabweichung der Streuung). Dieser optische Rauheitswert s_{N} hat allerdings keinen Bezug zu den genormten Oberflächenkenngrößen und läßt sich auf diese auch nicht umrechnen. Außerdem wird die Rauheitskenngröße s_{N} durch die Oberflächenstruktur der Prüflingsfläche, die hauptsächlich durch das Fertigungsverfahren und den Werkstoff bestimmt wird, beeinflußt. Diffusstreuende Oberflächen sind nicht mehr meßbar. Bei dem Fokusdetektorverfahren wird das Licht einer Laser-Diode durch eine spezielle Mikrooptik zu einem Fokus von rund 1 µm gebündelt und beleuchtet das Meßobjekt. Die vom Prüfling reflektierte Strahlung fällt auf 2 Diodenpaare, deren Ausgangssiqnale eine mechanische Nachjustierung der Objektivlinse so beeinflußt, daß der Fokus während des Meßvorganges dem Oberflächenprofil nachgeführt wird. Die Nachführbewegung wird, analog der Tastnadel eines Tastschnittgerätes, mit einem induktiven Wegmesser erfaßt und zur Auswertung des Meßvorganges herangezogen (Prospekt Micro-Focus, UBM Meßtechnik GmbH Ettlingen; Prospekt focodyn, Feinprüf GmbH Göttingen). Die Mindestreflektion der Prüflinge muß 4% betragen. Bei steilflankigen Oberflächenprofilmerkmalen (Poren, gesinterte Materialien) können Verfälschungen in den Aufzeichnungen entstehen. Seit einiger Zeit stehen pneumatische, berührungslose Meßverfahren zur Verfügung, die besonders im fertigungsnahen Bereich Anwendung finden. Hierbei wird ein pneumatischer Meßwertaufnehmer mit Hilfe einer Vorschubeinrichtung mit konstanter Geschwindigkeit über die Oberfläche geführt. Die Meßwerterfassung erfolgt pneumatisch, nach dem Prinzip der Differenzdruckmessung. Die pneumatisch erfaßte Oberflächenabweichung wird in elektrische Signale umgewandelt und einem Oberflächenmeßwertrechner zugeführt. Die Meßwerte werden durch die Oberflächenstruktur und Rauheitsgröße unterschiedlich beeinflußt. Vor Beginn der Messung ist es erforderlich, daß das pneumatische Meßgerät zunächst kalibriert wird (Sander,M: Oberflächenmeßtechnik für den Praktiker, Feinprüf GmbH, Göttingen 1989).
Ein weiteres Verfahren ist die kapazitive Rauheitsmessunq. Diese kann taktil oder, mit einem neu entwickelte Verfahren, berührungslos erfolgen. Bei der kapazitiven Rauheitsmessunq wird die Oberfläche dreidimensional ausgewertet. Die Messung benötigt nur sehr kurze Zeit und liefert integrierend über die gesamte Oberfläche ein oberflächenrepräsentatives elektrisches Signal, das mit den wesentlichen genormten Rauheitskenngrößen korreliert. Es erfolgt dabei keine punktweise Auflösung, so daß die Oberfläche nicht geometrisch dargestellt werden kann. Die Oberflächenstruktur des Prüflings aufgrund des Fertigungsverfahrens muß allerdings bekannt sein, da das Ausgangssignal von ihr beeinflußt wird (Patentschrift DD 297 509).
Bei den bekannten Verfahren zur Messung von Oberflächengeometrien sind zusammenfassend als nachteilig und nicht zufriedenstellend anzusehen: die relativ langen Meßzeiten und keine befriedigende dreidimensionale Auswertung der Oberflächengeometrie, relativ große und störanfällige Meßaufbauten, Handmeßgeräte mit nur sehr eingeschränkten funktionellen Parametern und nur sehr beschränkte Möglichkeiten der in-process-Messung.

### Darstellung der Erfindung

Der Erfindung liegt die Aufgabe zugrunde, ein Verfahren zu schaffen, mit welchem Oberflächengeometrien technischer Erzeugnisse in sehr kurzer Zeit dreidimensional in einem einzigen Meßschritt erfaßt werden können. Weiterhin soll eine Vorrichtung zur Durchführung dieses Verfahrens geschaffen werden, die sehr gut als in-process-Sensor oder Handgerät mit hochwertigen technischen Eigenschaften geeignet ist.

Die Erfindung ist in den Patentansprüchen angegeben.

Diese Aufgabe wird dabei dadurch gelöst, daß zunächst eine ebene, transparente Elektrode gegenüber der zu messenden Oberfläche in der Weise angeordnet wird, daß diese mit ihr einen Kondensator bildet und wobei weiterhin das durch Anlegen einer elektrischen Spannung entstehende, entsprechend der Oberflächengeometrie inhomogene elektrische Feld über eine zwischen der ebenen, transparenten Elektrode und der zu messenden Oberfläche befindliche optische Substanz, die in Abhängigkeit der elektrischen Feldstärke ihre lichtemittierenden oder lichttransparenten Eigenschaften ändert, in optische Informationen gewandelt wird, die daraufhin über eine Matrix aus fotoelektrischen Elementen erfaßt und in elektrische Signale umgewandelt werden, die mittels einer Auswerteelektronik und/oder einer speziellen Software schließlich in Längeninformationen umgewandelt werden. Wird zwischen der transparenten Elektrode und dem Prüfling mit der zu messenden rauhen Oberfläche eine Spannung angelegt, baut sich zwischen der Prüflingsoberfläche und der transparenten Elektrode ein elektrisches Feld auf, welches entsprechend durch die unterschiedlichen Abstände der lokalen Oberflächenpunkte und der ebenen, transparenten Elektrode Inhomogenitäten bzw. über die gesamte zu messende Oberfläche unterschiedliche Feldstärken aufweist.
Diese Inhomogenitäten, die somit eine Funktion der Oberflächenrauheit darstellen, beeinflussen die mit dem inhomogenen Feld durchsetzte optische Substanz in seinen lichtemittierenden bzw. lichttransparenten Eigenschaften. Durch die lokal unterschiedlichen Feldstärken werden diese Eigenschaften ebenfalls lokal unterschiedlich eingestellt, wodurch das austretende Licht lokal, entsprechend der Oberflächenunregelmäßigkeiten des Prüflings, unterschiedliche Eigenschaften (wie z.B. Intensität oder Farbe), aufweist. Dieses entstandene Grauwert- oder Farbfeld wird mit einer CCD-Matrix oder ähnlichen fotoelektrischen Elementen aufgenommen und über eine entsprechende hard- und softwaremäßige Auswertung mit Hilfe von Kalibrierdaten in Längen- bzw. Höhenmaße umgewandelt. Durch die Pixelmatrix des CCD-Elementes sind, unter Berücksichtigung der optischen Vergrößerung bzw. Verkleinerung des Bildes, die x- und y-Koordinaten gegeben. Die z-Koordinaten ergeben sich aus der optischen Information des Sensors, womit die genauen Koordinaten der Oberflächenpunkte bestimmt werden können.

Zur Durchführung des Verfahrens wird eine Vorrichtung vorgeschlagen, bei der in unmittelbarem Abstand von der zu messenden Oberfläche ein dielektrischer Spiegel, dahinter folgend die optische Substanz (vorzugsweise Flüssigkristall) mit beidseitig angeordneten Orientierungsschichten, die ihre lichttransparenten Eigenschaften im Zusammenwirken mit einem Polarisator in Abhängigkeit von der elektrischen Feldstärke ändert, dahinter folgend eine lichttransparente, ebene Elektrode, an der die konstante elektrische Spannung angelegt wird und zwischen der und der zu messenden Oberfläche sich das, die optische Substanz durchsetzende, elektrische Feld aufbaut, dahinter folgend eine planparallele Glasplatte als Träger mit dem Polarisator und dahinter folgend eine Beleuchtungseinrichtung, ein Strahlteiler, eine Optik und eine Matrix aus fotoelektrischen Elementen, die die optischen Informationen erfassen und in elektrische Signale wandeln, die über eine Auswerteelektronik und/oder über eine spezielle Software in Längeninformationen umgewandelt werden, angeordnet sind.

Ferner wird zur Durchführung des Verfahrens eine Vorrichtung vorgeschlagen, bei der in unmittelbarem Abstand von der zu messenden Oberfläche die optische Substanz, die ihre lichtemittierenden Eigenschaften in Abhängigkeit von der elektrischen Feldstärke ändert, dahinter folgend eine lichttransparente, ebene Elektrode, an der die konstante elektrische Spannung angelegt wird und zwischen der und der zu messenden Oberfläche sich das, die optische Substanz durchsetzende, elektrische Feld aufbaut, dahinter folgend eine planparallele Glasplatte und dahinter folgend eine Matrix aus fotoelektrischen Elementen, die die optischen Informationen erfassen und in elektrische Signale wandeln, die über eine Auswerteelektronik und/oder über eine spezielle Software in Längeninformationen umgewandelt werden, angeordnet sind.

Sind Oberflächengeometrien elektrisch nichtleitender Materialien zu messen, werden seitlich neben der ebenen, transparenten Elektrode, in einer parallelen Ebene zu dieser in Höhe der zur zu messenden Oberfläche hin liegenden Seite der optischen Substanz eine oder mehrere Elektroden angeordnet. Diese Elektroden besitzen gegenüber der ebenen, transparenten Elektrode entgegengesetztes Potential, so daß das sich zwischen diesen Elektroden aufbauende elektrische Feld den Prüfling aus dem elektrisch nichtleitenden Material in Form eines elektrischen Streufeldes durchsetzt. Um der Vorrichtung in ihrem schichtmäßigen Aufbau eine genügende mechanische Stabilität zu verleihen, ist die Anordnung einer Feldleitungsplatte an der zur zu messenden Oberfläche hin liegenden Seite der Vorrichtung vorteilhaft. Diese Feldleitungsplatte besteht aus einer Vielzahl von nebeneinander stehenden Mikrosäulen. Da diese Mikrosäulen voneinander elektrisch isoliert sind, treten im Funktionsfall in jeder Mikrosäule unterschiedlich starke Influenzerscheinungen auf, was einer elektrischen Feldleitung gleichkommt. Inhomogenitäten des elektrischen Feldes werden so verlustfrei, entsprechend des Mikrosäulenquerschnitts, übertragen. Die Feldleitungsplatte bietet somit eine ausreichende Festigkeit, beeinflußt aber das inhomogene Feld in diesem Bereich nur in einem vernachlässigbar geringen Maße. Aufgrund der notwendigen Isolation der metallischen Mikrosäulen gegenüber der Oberfläche des Prüflings ist die Feldleitungsplatte an dieser Seite mit einer verschleißfesten dielektrischen Schicht überzogen.

Die mit der Erfindung erzielten Vorteile bestehen insbesondere darin, daß die Längeninformation der Oberfläche flächenhaft in eine optische Information umgewandelt und über eine CCD-Matrix alle Punkte nahezu gleichzeitig erfaßt werden. Damit ist kein Scannen der Oberfläche notwendig und die Messung erfolgt in Bruchteilen von Sekunden. Die sehr gute Miniaturisierbarkeit der Vorrichtung bietet die Möglichkeit, sie als Handgerät und sogar als in-process-Sensor auszubilden. Durch die geringen Meßzeiten gegenüber dem Tastschnittverfahren können sich Störeinflüsse auf die Messung nicht mehr bzw. nur in vernachlässigbarer Größe auswirken. Desweiteren bestehen die Vorteile in der nahezu gleichen Meßpunktanzahl in x- und y-Richtung durch die gleichmäßige Pixelanordnung der CCD-Matrix und in der dadurch realen Bestimmung der Oberflächenrauheit im dreidimensionalen Raum unter Berücksichtigung der Quer- und Längsrauheit. Es sind weiterhin keine qroßen Meßaufbauten notwendig und es ist ein flexibler, unkomplizierter und prozeßnaher Einsatz der Vorrichtung möglich.

### Kurze Beschreibung der Zeichnungen

Zwei Ausführungsbeispiele sind in den Zeichnungen dargestellt und im folgenden näher beschrieben.

Es zeigen
- Fig. 1:: Prinzipaufbau einer Vorrichtung zur Messung der Oberflächengeometrie mit Flüssigkristall als passive optische Substanz im Primärwandler
- Fig. 2:: Prinzipaufbau des Primärwandlers mit Flüssigkristall als optische Substanz
- Fig. 3:: Prinzipaufbau einer Vorrichtung zur Messung der Oberflächengeometrie mit aktiver, lumineszierender optischer Substanz und direkter Abbildung

### Bester Weg zur Ausführung der Erfindung

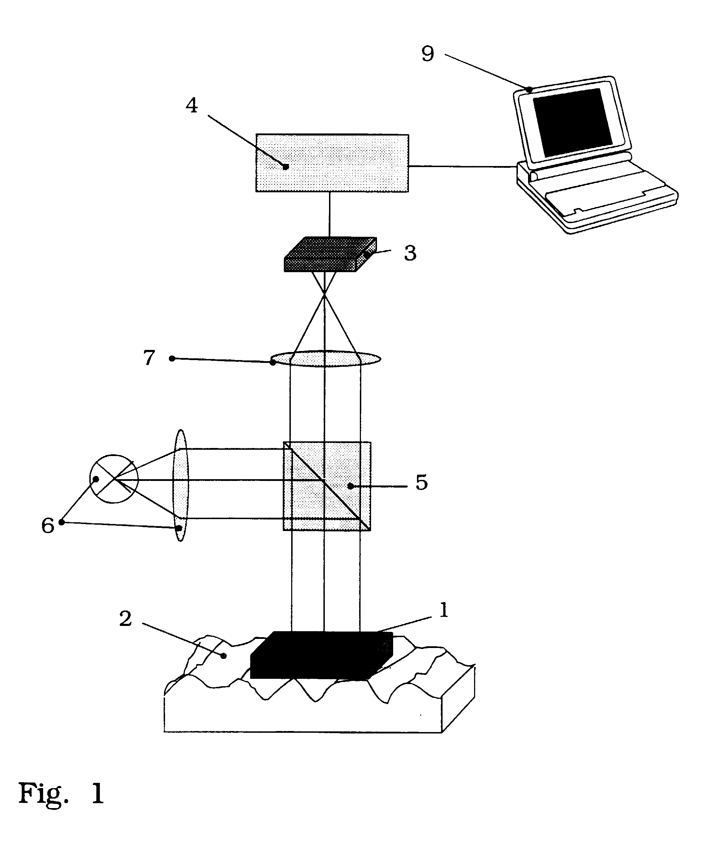

Bei Anwendung des erfindungsgemäßen Verfahrens wird über eine Beleuchtungseinheit 6 und einPn Strahlteiler 5 der Primärwandler 1 mit Licht konstanter Intensität beleuchtet (Fig.1). Das vom Primärwandler reflektierte und in Abhängigkeit der entsprechenden Oberflächengeometrie des Prüflings 2 in der Intensität modifizierte Licht, in Form eines Grauwertfeldes, wird über eine Optik 7 auf einer CCD-Matrix 3 abgebildet. Die optischen Informationen in Form der Grauwerte werden hier in elektrische Signale umgewandelt und über eine entsprechende Elektronik 4 einem Rechner 9 zugeführt. Mit Hilfe von gespeicherten Kalibrierdaten werden die Grauwertinformationen in Längen- bzw. Höheninformationen umgewandelt.

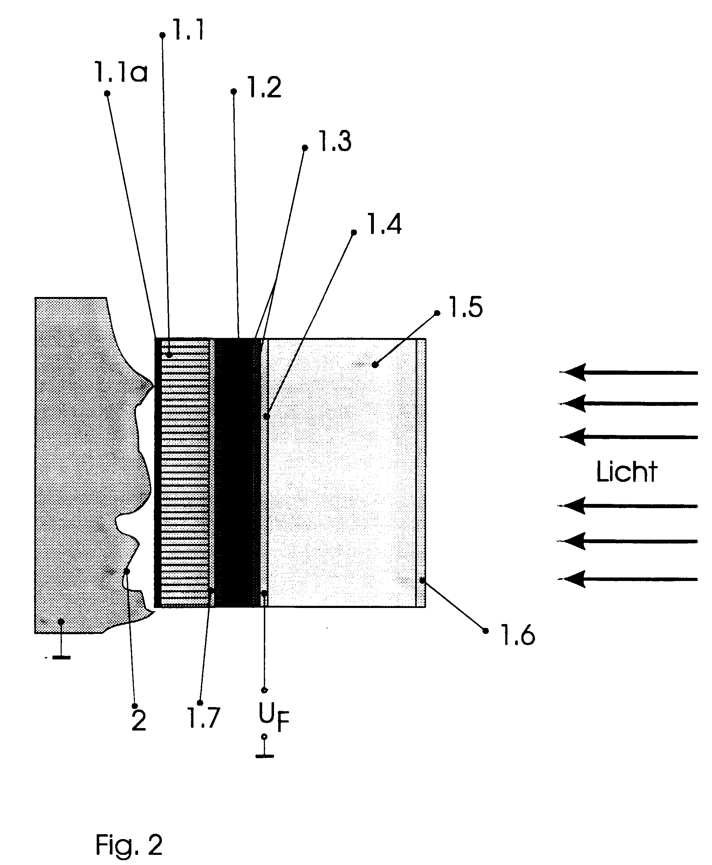

Fig. 2 zeigt den Prinzipaufbau eines Primärwandlers mit Flüssigkristall als passive optische Substanz. Die Modifizierung des Lichtes erfolgt im Primärwandler in der Weise, daß das Licht konstanter Intensität in Form eines achsparallelen Strahlenbündels durch den Polarisator 1.6 polarisiert wird und den Glasträger 1.5, die transparente Elektrode 1.4, die Orientierungsschichten 1.3 und das Flüssigkristall 1.2 durchstrahlt und an dem dielektrischen Spiegel 1.7 reflektiert wird und die Schichten in umgekehrter Reihenfolge durchläuft, bis es am Polarisator 1.6 wieder aus dem Primärwandler austritt. Durch das Flüssigkristall 1.2 wird das polarisierte Licht in bekannter Weise der Flüssigkristallanzeigen gedreht, wodurch gewisse Komponenten des polarisierten Lichtes am Polarisator 1.6 gefiltert werden und somit gegebenenfalls eine Intensitätsverringerung beim Austritt des Lichtes aus dem Primärwandler zu verzeichnen ist. Die Orientierungsschichten 1.3 dienen der Vororientierung der Flüssigkristalle. Das durch Anlegen einer konstanten elektrischen Spannung U_{F} erzeugte elektrische Feld zwischen der Oberfläche des Prüflings 2 und der transparenten, ebenen Elektrode 1.4 ist entsprechend der Oberflächengeometrie des Prüflings 2 inhomogen. Durch den unterschiedlichen Abstand der lokalen Oberflächenpunkte des Prüflings 2 und der gegenüberliegenden lokalen Oberflächenpunkte der transparenten, ebenen Elektrode sind die elektrischen Feldstärken in diesen Bereichen ebenfalls unterschiedlich. Das hat zur Folge, daß die Flüssigkristalle in diesen Bereichen unterschiedlich stark gedreht bzw. orientiert werden und somit das polarisierte Licht ebenso unterschiedlich stark gedreht wird, so daß das Licht hinter dem Polarisator 1.6 beim Austreten aus dem Primärwandler an den Stellen, entsprechend der Position der lokalen Oberflächenpunkte, unterschiedliche Intensitäten bzw. verschiedene Graustufen aufweist. Um eine Homogenisierung des inhomogenen elektrischen Feldes zu vermeiden, ist es notwendig, geringste Abstände zwischen der Oberfläche des Prüflings 2 und der transparenten, ebenen Elektrode 1.4 (optimal = Profiltiefe der Oberfläche des Prüflings 2) einzuhalten. Eine Realisierung dieser geringen Abstände unter Gewährleistung der notwendigen Stabilität des Primärwandlers, insbesondere der Ebenheit des dielektrischen Spiegels, wird erreicht durch Anordnen einer Feldleitungsplatte 1.1. Diese Feldleitungsplatte 1.1 besteht aus aus einer an der zur zu messenden Oberfläche hingewandten Seite angeordneten, dünnen, verschleißfesten, dielektrischen Schicht 1.1a und aus dahinter angeordneten nebeneinander stehenden, voneinander elektrisch isolierten Mikrosäulen, wodurch über Influenzerscheinungen an den Stirnseiten der Mikrosäulen die Inhomogenitäten des elektrischen Feldes entsprechend des Querschnitts der Mikrosäulen weitgehend verlustfrei über die Strecke der Dicke der Feldleitungsplatte geleitet werden und eine mechanische Stabilität der Vorrichtung erzielt wird.

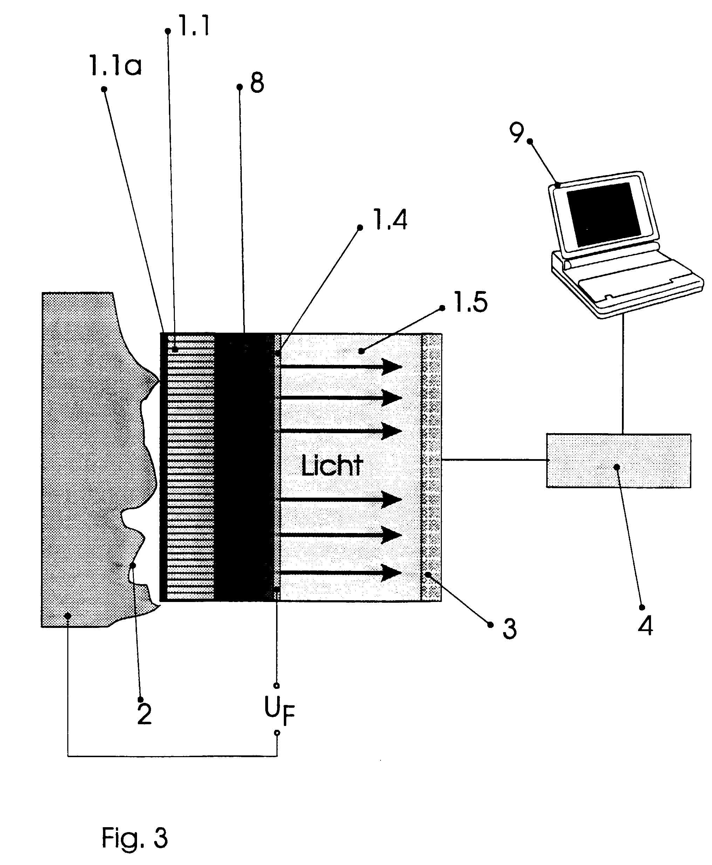

Fig. 3 zeigt den Prinzipaufbau einer Vorrichtung zur Messung der Oberflächengeometrie mit aktiver, lumineszierender optischer Substanz 8 und direkter Abbildung des Grauwertbildes auf einer CCD-Matrix 3. Zwischen der Feldleitungsplatte 1.1 und der transparenten, ebenen Elektrode 1.4 befindet sich eine lumineszierende Substanz 8 (z.B. kupferdotiertes ZnS in Dielektrikum eingebunden).
Analog dem ersten Ausführungsbeispiel wird die lumineszierende Substanz von einem der Oberflächengeometrie des Prüflings 2 entsprechenden inhomogenen Feld durchsetzt, wodurch die lumineszierende Substanz 8 zum aktiven Leuchten angeregt wird. Die Intensität des emittierten Lichtes ist abhängig von der elektrischen Feldstärke im Bereich des jeweils betrachteten Oberflächenpunktes, dessen Abstand von dem gegenüberliegenden lokalen Punkt auf der transparenten, ebenen Elektrode die Größe der elektrischen Feldstärke in diesem Bereich bestimmt, bei konstanter elektrischer Spannung U_{F}. Das so entstehende Grauwertfeld wird analog des ersten Ausführungsbeispiels über eine CCD-Matrix 3, die direkt auf den Glasträger 1.5 angeordnet ist, eine Elektronik 4 und einem Rechner 9 ausgewertet und in Längen- bzw. Höhenmaße umgewandelt.

## Patentansprüche

1. Verfahren zur Messung von dreidimensionalen Geometrien technischer Oberflächen, wobei zunächst eine ebene, transparente Elektrode gegenüber der zu messenden Oberfläche in der Weise angeordnet wird, daß diese mit ihr einen Kondensator bildet,
dadurch gekennzeichnet,
daß ein durch Anlegen einer konstanten elektrischen Spannung (U_{F}) entstehendes, entsprechend der Oberflächengeometrie inhomogenes elektrisches Feld über eine zwischen der ebenen, transparenten Elektrode (1.4) und der zu messenden Oberfläche (2) befindliche optische Substanz (1.2;8), die in Abhängigkeit der elektrischen Feldstärke ihre lichtemittierenden oder lichttransparenten Eigenschaften ändert, in optische Informationen gewandelt wird, die daraufhin in an sich bekannter Weise über eine Matrix aus fotoelektrischen Elementen (3) erfaßt und in elektrische Signale umgewandelt werden, die mittels einer Auswerteelektronik (4) und/oder einer speziellen Software schließlich in Längeninformationen umgewandelt werden.

2. Vorrichtung zur Durchführung des Verfahrens nach Anspruch 1,
dadurch gekennzeichnet,
daß in unmittelbarem Abstand von der zu messenden Oberfläche (2) die optische Substanz (8), die ihre lichtemittierenden Eigenschaften in Abhängigkeit von der elektrischen Feldstärke ändert, dahinter folgend eine lichttransparente, ebene Elektrode (1.4), an der die konstante elektrische Spannung (U_{F}) angelegt wird und zwischen der und der zu messenden Oberfläche (2) sich das, die optische Substanz (8) durchsetzende, elektrische Feld aufbaut, dahinter folgend eine planparallele Glasplatte (1.5) und dahinter folgend in an sich bekannter Weise eine Matrix aus fotoelektrischen Elementen (3), die die optischen Informationen erfassen und in elektrische Signale wandeln, die über eine Auswerteelektronik (4) und/oder über eine spezielle Software in Längeninformationen umgewandelt werden, angeordnet sind.

3. Vorrichtung nach Anspruch 2,
dadurch gekennzeichnet,
daß seitlich neben der ebenen, transparenten Elektrode (1.4), in einer parallelen Ebene zu dieser, in Höhe der zur zu messenden Oberfläche (2) liegenden Seite der optischen Substanz (1.2;8) eine oder mehrere Elektroden angeordnet sind, die ein zu der ebenen, transparenten Elektrode (1.4) entgegengesetztes Potential aufweisen und deren elektrisches Feld den elektrisch nichtleitenden Prüfling mit der zu messenden Oberfläche (2) in Form eines Streufeldes durchsetzen.

4. Vorrichtung nach Anspruch 2,
dadurch gekennzeichnet,
daß an der zur zu messenden Oberfläche (2) hin liegenden Seite der Vorrichtung eine Feldleitungsplatte (1.1) angeordnet ist, die aus einer an der zur zu messenden Oberfläche hingewandten Seite angeordneten, dünnen, verschleißfesten, dielektrischen Schicht (1.1a) und aus dahinter angeordneten nebeneinander stehenden, voneinander elektrisch isolierten Mikrosäulen besteht, wodurch über Influenzerscheinungen an den Stirnseiten der Mikrosäulen die Inhomogenitäten des elektrischen Feldes weitgehend verlustfrei über die Strecke der Dicke der Feldleitungsplatte (1.1) geleitet werden und eine mechanische Stabilität der Vorrichtung erzielt wird.

## Claims

1. A method for measuring three-dimensional geometries of technical surfaces, with a plane transparent electrode being arranged with respect to the surface to be measured in such a way that it forms a capacitor with said surface, characterized in that an electric field which arises by the application of a constant electrical voltage (U_{F}) and is inhomogenous according to the surface geometry is converted into optical information through an optical substance (1.2; 8) disposed between the plane transparent electrode (1.4) and the surface to be measured (2), which substance changes its light-emitting or light-transparent properties depending on the electrical field strength, which information is thereupon detected in the known manner via a matrix of photoelectric elements (3) and is converted into electrical signals which are finally converted into length information by means of an electronic evaluation unit (4) and/or a special software.

2. An apparatus for carrying out the method as claimed in claim 1, characterized in that in the ultimate vicinity of the surface (2) to be measured there are arranged the optical substance (8) which changes its light-emitting properties depending on the electrical field strength, following thereafter a light-transparent plane electrode (1.4) to which the constant electrical voltage (U_{F}) is applied, with the electrical field building up between said electrode and the surface (2) to be measured and penetrating the optical substance (8), following thereafter a plane-parallel glass plate (1.5) and following thereafter in the known manner a matrix of photoelectric elements (3) which detect the optical information and convert them into electric signals which are converted into length information via an electronic evaluation unit (4) and/or via special software.

3. An apparatus as claimed in claim 2, characterized in that one or several electrodes are arranged laterally adjacent to the plane transparent electrode (1.4) in a parallel plane thereto, at the level of the side of the optical substance (1.2; 8) being situated towards the surface to be measured (2), which electrodes are provided with a potential opposite of the plane transparent electrode (1.4) and whose electrical field penetrates the electrically non-conductive test piece with the surface to be measured (2) in form of a leakage field.

4. An apparatus as claimed in claim 2, characterized in that a field conduction plate (1.1) is arranged at the side of the apparatus being disposed towards the surface (2) to be measured, which plate consists of a thin wear-proof dielectric layer (1.1a) being arranged at the side facing the surface to be measured and of mutually electrically insulated micropillars which are arranged behind the layer and stand next to one another, by means of which the inhomogeneities of the electric field are conducted substantially free of losses over the path of the thickness of the field conduction plate (1.1) via electrostatic phenomena at the face sides of the micropillars and a mechanical stability of the apparatus is achieved.

## Revendications

1. Procédé de mesure de géométries tridimensionelles d'aires techniques selon lequel on place tout d'abord une électrode plate et transparente face à l'aire à mesurer de manière à ce qu'elle forme un condensateur avec celle-ci,
caractérisé
en ce qu'un champ électrique non-homogène correspondant à la géométrie de l'aire et créé par l'application d'une tension électrique constante (Up) est transformé en informations optiques par l'intermédiaire d'une substance optique (1.2;8) située entre une électrode plate et transparente (1.4) et l'aire à mesurer (2), cette substance optique modifiant ses propriétés d'émission de la lumière ou de transparence à la lumière en fonction de l'intensité du champ électrique, les informations optiques étant ensuite collectées de manière connue au moyen d'une matrice d'éléments photoélectriques (3) et converties en signaux électriques, lesquels sont finalement transformés en informations sur la longueur au moyen d'une électronique d'analyse (4) et/ou d'un logiciel spécial.

2. Dispositif pour la réalisation du procédé selon la revendication 1,
caractérisé
en ce qu'à proximité de l'aire à mesurer (2), on trouve la substance optique (8) modifiant ses propriétés d'émission de la lumière en fonction de l'intensité du champ électrique, suivie d'une électrode (1.4) plate et transparente à la lumière sur laquelle on applique la tension électrique constante (Up) et entre laquelle et l'aire à mesurer (2) se forme le champ électrique traversant la substance optique (8), suivie d'une plaque en verre (1.5) parallèle au plan et suivie enfin de manière connue d'une matrice composée d'éléments photoélectriques (3), lesquels collectent les informations optiques et les convertissent en signaux électriques, ceux-ci étant ensuite transformés en informations sur la longueur au moyen d'une électronique d'analyse (4) et/ou d'un logiciel spécial.

3. Dispositif selon la revendication 2,
caractérisé
en ce qu'on a placé une ou plusieurs électrodes latéralement près de l'électrode (1.4) plate et transparente, sur un plan parallèle à celle-ci et à la hauteur de la partie de la substance optique (1.2;8) adjacente à l'aire à mesurer (2), ces électrodes présentant un potentiel opposé à celui de l'électrode plate et transparente (1.4) et leur champ électrique traversant le spécimen électriquement non-conducteur avec l'aire à mesurer (2) sous la forme d'un champ de dispersion.

4. Dispositif selon la revendication 2,
caractérisé
en ce qu'on a placé une plaque de conduction de champ (1.1) sur la partie du dispositif adjacente à l'aire à mesurer, cette plaque se composant d'une fine couche (1.la) diélectrique, résistante à l'usure et située sur la partie tournée vers l'aire à mesurer, et de micropiles isolées électriquement les unes des autres et placées les unes à côté des autres à l'arrière de celle-ci, des apparitions d'influence sur les fronts des micropiles permettant une conduction sensiblement sans pertes des non-homogénéités du champ électrique le long de l'épaisseur de la plaque de conduction de champ (1.1) et l'obtention d'une stabilité mécanique du dispositif.
